# DEMANDE DE BREVET EUROPEEN

(11) **EP 2 196 349 A1**
(43) Date de publication de la demande: **16.06.2010**
(21) Numéro de dépôt: 08171135.0
(22) Date de dépôt: 09.12.2008
(51) Int. Cl.: B60K 37/02, G02B 27/01, G02B 27/00

(54) **Dispositif d'affichage tête haute utilisant un encodeur holographique**

(71) Demandeur: Delphi Technologies, Inc., Troy, Michigan 48007 (US)
(72) Inventeur: Tupinier, Laurent, 67116, Reichstett (FR); Ndao, Mandiaye, 67000, Strasbourg (FR)
(74) Mandataire: Robert, Vincent

(57) **Abrégé**

Dispositif d'affichage tête haute pour véhicule automobile comportant une unité de projection (14) et un écran de projection (18) qui est situé dans l'axe de vision du conducteur et qui est prévu pour afficher des informations de fonctionnement ou de conduite du véhicule, caractérisé en ce que l'unité de projection comporte une source lumineuse (26) qui produit un faisceau lumineux focalisé et un encodeur holographique (28) qui est prévu pour produire des images holographiques représentant les informations de fonctionnement ou de conduite du véhicule, l'encodeur étant interposé sur le trajet du faisceau lumineux entre la source lumineuse et l'écran de projection, de manière à afficher les images holographiques sur l'écran de projection.

## Description

### DOMAINE TECHNIQUE

La présente invention concerne un dispositif d'affichage tête haute pour véhicule automobile.

### ARRIERE-PLAN TECHNOLOGIQUE DE L'INVENTION

Les dispositifs d'affichage tête haute pour l'automobile sont généralement réalisés en utilisant des technologies dérivées d'applications aéronautiques. Certaines alternatives ont été développées mais elles présentent toujours des coûts de fabrication importants qui empêchent leur commercialisation et leur installation à plus grande échelle sur des véhicules de gamme basse ou moyenne.

Un exemple de dispositif d'affichage tête haute est décrit et représenté dans le document EP1862841. Dans ce document, le dispositif comporte un écran à cristaux liquides qui est éclairé par une source lumineuse de manière à projeter les informations depuis l'écran à cristaux liquides vers une zone d'affichage dans le champ de vision du conducteur après réflexion sur un miroir holographique.

L'utilisation d'écran LCD dans le dispositif d'affichage présente des contraintes car il est difficile, avec les systèmes actuels, d'obtenir de manière fiable et répétitive une image projetée de bonne qualité, en particulier concernant la netteté et le contraste. Ainsi, le contraste d'un écran LCD est généralement limité à 100-500:1, ce qui conduit à un bruit de fond indésirable dans l'image projetée.

### RESUME DE L'INVENTION

La présente invention vise à proposer une solution pour réaliser un dispositif d'affichage tête haute économique et compact qui puisse permettre de l'installer dans un module de toit ou dans le tableau de bord d'un véhicule automobile.

Dans ce but, la présente invention propose un dispositif d'affichage tel que décrit dans les revendications attachées.

La présente invention propose un dispositif d'affichage tête haute compact et économique utilisant des solutions techniques à base d'optique diffractive. Le dispositif selon l'invention comporte un projecteur et un écran qui permette l'affichage de l'information dans le champ de vision du conducteur.

L'invention propose d'encoder préalablement les images des informations à afficher sous la forme d'hologrammes générés par ordinateur et disposés sur un support en matériau plastique par embossage ou par injection.

Ainsi, contrairement à un système classique, les images projetées sont toujours focalisées quel que soit le lieu de projection dans le véhicule. De plus, il est juste nécessaire de prévoir un écran transparent pour afficher les informations. L'écran a de préférence des propriétés optiques adaptées pour assurer une bonne qualité d'affichage des informations. L'écran comporte par exemple un film holographique.

Un autre aspect important concernant l'écran est qu'il peut être de formes diverses sans que cela diminue la qualité d'affichage des informations projetées, garantissant ainsi un bon contraste et une absence de flou.

Le dispositif d'affichage tête haute selon l'invention peut être intégré dans un module de toit à l'intérieur du véhicule ou sur le tableau de bord.

Le dispositif selon l'invention est facile à intégrer dans l'habitacle du véhicule car il est très compact.

L'unité de projection nécessite uniquement un faisceau laser visible et un encodeur diffractif qui est plan. Ainsi, l'épaisseur de l'unité de projection peut être très faible, par exemple de 3 cm d'épaisseur.

La présente invention permet aussi d'améliorer le contraste en utilisant des éléments optiques diffractifs sans qu'il soit nécessaire de recourir à un écran à cristaux liquides.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est vue schématique qui représente l'habitacle d'un véhicule automobile équipé d'un dispositif d'affichage tête haute conforme aux enseignements de l'invention ;
- la figure 2 est une vue en coupe axiale qui représente schématiquement le dispositif d'affichage de la figure 1 ;
- la figure 3 est une vue de dessus qui représente un exemple de réalisation de l'encodeur holographique équipant le dispositif d'affichage de la figure 1 ;
- la figure 4 est une vue en perspective qui représente une variante de réalisation du dispositif d'affichage de la figure 2.

### DESCRIPTION DES MODES DE REALISATION PREFERES

Dans la suite de la description, des éléments identiques ou similaires seront désignés par les mêmes références.

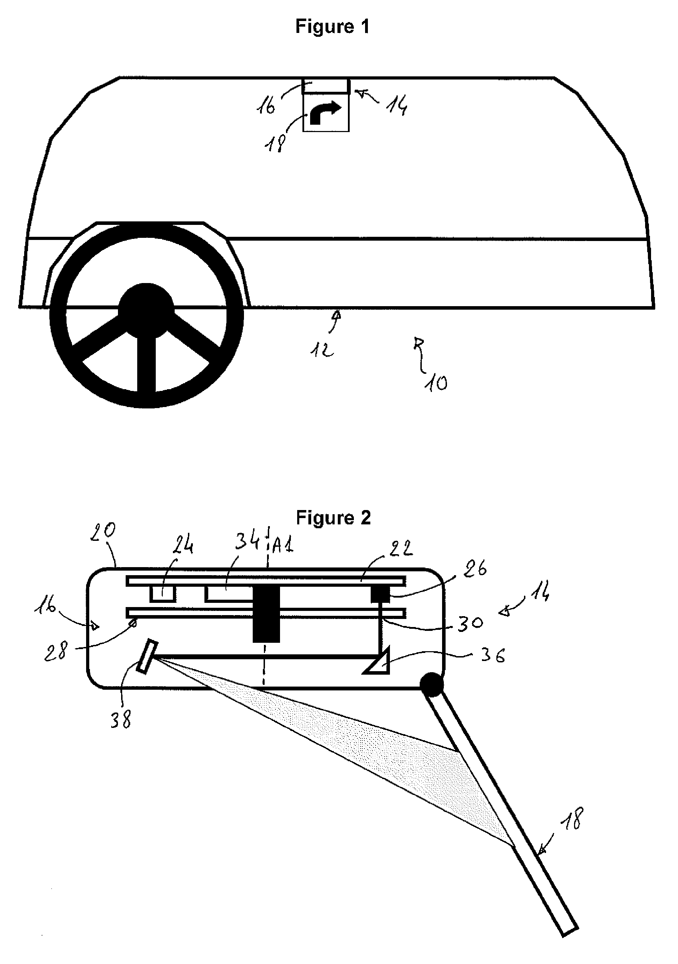

Sur la figure 1 on a représenté schématiquement l'intérieur d'un véhicule automobile 10 comportant un tableau de bord 12 et un dispositif d'affichage tête haute 14 réalisé conformément aux enseignements de l'invention. Selon le mode de réalisation représenté, le dispositif d'affichage tête haute 14 est agencé au-dessus du tableau de bord 12. Ce dispositif d'affichage 14 peut par exemple être intégré au module de toit qui équipe certains véhicules.

Le dispositif d'affichage tête haute 14 selon l'invention comporte une unité de projection 16 et un écran de projection 18 qui est situé dans l'axe de vision du conducteur et qui est prévu pour afficher des informations de fonctionnement ou de conduite du véhicule.

Selon l'exemple de réalisation représenté sur la figure 2, l'unité de projection 16 est montée à l'intérieur d'un boîtier 20 et l'écran de projection 18 est monté pivotant sur le boîtier 20.

Le boîtier 20 contient un support 22, par exemple une plaque à circuits imprimés, sur lequel est monté une unité électronique de commande 24, une source lumineuse 26 qui produit un faisceau lumineux focalisé, et un encodeur holographique diffractif 28 qui est prévu pour produire des images holographiques représentant les informations de fonctionnement ou de conduite du véhicule.

L'encodeur 28 est interposé sur le trajet du faisceau lumineux entre la source lumineuse 26 et l'écran de projection 18, de manière à afficher les images holographiques sur l'écran de projection 18. La source lumineuse peut être une diode produisant un faisceau laser dans le domaine visible par le conducteur.

Avantageusement, l'encodeur 28 est réalisé sous la forme d'une pièce en matériau plastique transparent comportant des éléments optiques diffractifs 30 en surface qui forment des hologrammes 32 correspondant aux différentes informations à afficher. Chaque hologramme 32 correspond à une combinaison déterminée d'informations prévues pour être affichées sur l'écran de projection 18. L'encodeur 28 peut être réalisé par injection ou embossage dans un matériau plastique transparent.

L'unité de projection 16 comporte des moyens commandés 34 pour permettre le déplacement relatif de la source lumineuse 26 par rapport à l'encodeur 28 de manière que la combinaison d'informations affichée sur l'écran 18 soit sélectionnée en choisissant une position relative déterminée de la source lumineuse 26 par rapport à l'encodeur 28.

Selon une variante de réalisation (non représentée), l'encodeur 28 pourrait être fixe et la source lumineuse 26 serait mobile.

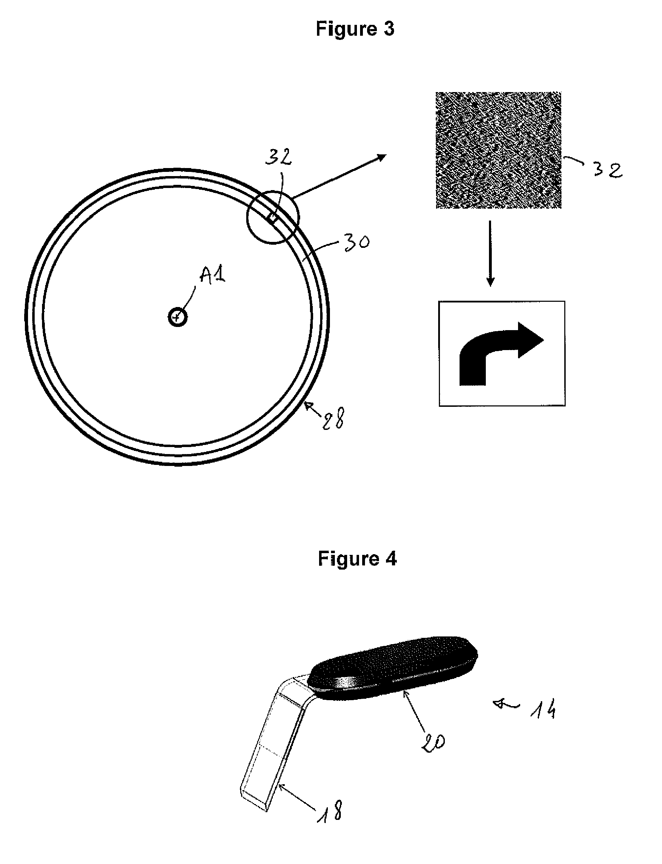

De préférence, comme représenté en particulier sur les figures 2 et 3, l'encodeur 28 est un disque qui est monté à rotation autour de son axe A1 par rapport à la source lumineuse 26. L'unité de projection 16 comporte un moteur 34 qui est commandé par l'unité électronique de commande 24 en vue d'entraîner en rotation l'encodeur 28.

Comme représenté schématiquement sur la figure 3, le disque comporte un anneau qui peut défiler devant la source lumineuse 26. Cet anneau comporte une multitude d'hologrammes 32 correspondant chacun à une image représentant une combinaison déterminée d'informations à afficher. Les hologrammes sont générés par ordinateur et peuvent ensuite être réalisés industriellement par injection ou embossage sur la surface de la pièce en plastique formant le disque.

Suivant l'information à afficher, l'unité électronique 24 commande la rotation de l'encodeur 28 dans une position angulaire déterminée et l'allumage de la source lumineuse 26, après réflexion sur des miroirs 36, 38 pour diriger le faisceau vers l'écran 18, produit l'image désirée, par exemple la flèche de direction visible en bas à droite sur la figure 3. Le faisceau lumineux est diffracté par les hologrammes ce qui produit l'image projetée sur l'écran 18.

L'écran 18 est réalisé en matériau transparent et il est du type dichroïque, ce qui permet d'améliorer le contraste en fonction de la lumière à l'extérieur du véhicule.

Sur la figure 4 on a représenté une variante de réalisation du dispositif d'affichage 14 selon l'invention dans lequel l'écran de projection 18 est une lame en matière plastique qui est fixe et qui est emboîtée dans le boîtier 20 contenant l'unité de projection 16.

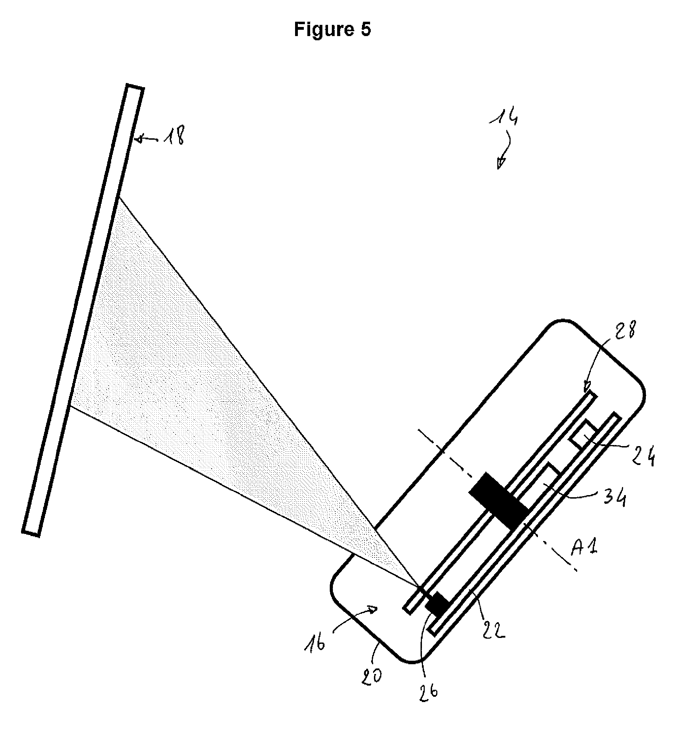

Sur la figure 5 on a représenté une autre variante de réalisation dans laquelle la source lumineuse 26 émet le faisceau lumineux focalisé directement vers l'encodeur 28 et le faisceau lumineux atteint l'écran de projection 18 directement après avoir traversé l'encodeur 28. Selon ce mode de réalisation il n'est pas nécessaire de prévoir des miroirs pour rediriger le faisceau lumineux après qu'il ait été diffracté par l'encodeur 28.

Des variantes de réalisation de l'invention pourraient être envisagées. En particulier, on pourrait prévoir plusieurs sources lumineuses de couleurs différentes de manière à afficher des informations en plusieurs couleurs.

## Revendications

1. Dispositif d'affichage tête haute pour véhicule automobile comportant une unité de projection et un écran de projection qui est situé dans l'axe de vision du conducteur et qui est prévu pour afficher des informations de fonctionnement ou de conduite du véhicule, **caractérisé en ce que** l'unité de projection comporte une source lumineuse qui produit un faisceau lumineux focalisé et un encodeur holographique qui est prévu pour produire des images holographiques représentant les informations de fonctionnement ou de conduite du véhicule, l'encodeur étant interposé sur le trajet du faisceau lumineux entre la source lumineuse et l'écran de projection, de manière à afficher les images holographiques sur l'écran de projection.

2. Dispositif selon la revendication précédente, **caractérisé en ce que** l'écran est réalisé en matériau transparent.

3. Dispositif selon la revendication précédente, **caractérisé en ce que** l'écran est du type dichroïque.

4. Dispositif selon l'une quelconque des revendications précédentes, **caractérisé en ce que** l'encodeur est réalisé sous la forme d'une pièce en matériau plastique transparent comportant des éléments optiques diffractifs en surface qui forment des hologrammes correspondant aux différentes informations à afficher.

5. Dispositif selon la revendication précédente, **caractérisé en ce que** chaque hologramme correspond à une combinaison déterminée d'informations prévues pour être affichées sur l'écran de projection, et **en ce que** l'unité de projection comporte des moyens commandés pour permettre le déplacement relatif de la source lumineuse par rapport à l'encodeur de manière que la combinaison d'informations affichée sur l'écran soit sélectionnée en choisissant une position relative déterminée de la source lumineuse par rapport à l'encodeur.

6. Dispositif selon la revendication précédente, **caractérisé en ce que** la source lumineuse est fixe et l'encodeur est mobile par rapport à la source lumineuse.

7. Dispositif selon la revendication précédente, **caractérisé en ce que** l'encodeur est un disque qui est monté à rotation par rapport à la source lumineuse et **en ce que** l'unité de projection comporte un actionneur pour commander la rotation de l'encodeur.

8. Dispositif selon l'une quelconque des revendications précédentes, **caractérisé en ce que** l'unité de projection comporte plusieurs sources lumineuses de couleurs différentes.

9. Dispositif selon l'une quelconque des revendications précédentes, **caractérisé en ce que** l'unité de projection est agencée dans un boîtier et **en ce que** l'écran de projection est monté pivotant par rapport au boîtier.

10. Dispositif selon l'une quelconque des revendications précédentes, **caractérisé en ce que** la source lumineuse émet le faisceau lumineux focalisé directement vers l'encodeur et **en ce que** le faisceau lumineux atteint l'écran de projection directement après avoir traversé l'encodeur.
